# DEMANDE DE BREVET EUROPEEN

(11) **EP 1 477 394 A1**
(43) Date de publication de la demande: **17.11.2004**
(21) Numéro de dépôt: 04291143.8
(22) Date de dépôt: 04.05.2004
(51) Int. Cl.: B62D 35/00

(54) **Dispositif aérodynamique pour un véhicule automobile**

(30) Priorité: 16.05.2003 FR 0305923
(71) Demandeur: Peugeot Citroen Automobiles SA, 78140 Vélizy Villacoublay (FR)
(72) Inventeur: Aider, Jean-Luc, 75014 Paris (FR); Lasserre, Jean-Jacques, 92320 Chatillon (FR); Herbert, Vincent, 75013 Paris (FR)
(74) Mandataire: Lanceplaine, Jean-Claude

(57) **Abrégé**

L'invention concerne un dispositif aérodynamique pour un véhicule automobile, caractérisé en ce qu'il comprend au moins un générateur de vortex (20) au moins en amont ou au niveau ou en aval d'au moins une zone tourbillonnaire de la carrosserie (2) du véhicule pour réduire la traînée et la portance de ce véhicule.

L'invention concerne également un véhicule automobile équipé d'un tel dispositif aérodynamique.

## Description

La présente invention concerne un dispositif aérodynamique pour un véhicule automobile et également un véhicule automobile équipé d'un tel dispositif aérodynamique.

Les véhicules automobiles, lorsqu'ils roulent, sont soumis à un certain nombre d'efforts qui s'oppose à leur avancement. Ces efforts sont en particulier les frottements solides, c'est à dire les contacts des roues avec le sol, et les frottements aérodynamiques, comme par exemple les frottements de l'air sur les parois de la carrosserie du véhicule.

En plus de ces frottements, les véhicules automobiles sont soumis à une troisième source d'efforts qui s'oppose également à leur avancement. Ces efforts sont les forces aérodynamiques exercées sur le véhicule à travers des régions de surpression et de dépression. En effet, à haute vitesse, ces efforts deviennent dominant par rapport aux autres et jouent un rôle essentiel sur la consommation et la stabilité du véhicule.

Ces forces aérodynamiques sont essentiellement générées par les dépressions créées par les décollements, les recirculations et les tourbillons longitudinaux de l'air. Les recirculations et donc les régions de basse pression sont importantes sur l'arrière du véhicule et particulièrement au niveau de la lunette arrière et du coffre. En effet, les écoulements de l'air à l'arrière des véhicules automobiles sont complexes et, en général, il se produit un équilibre entre les décollements et les tourbillons longitudinaux.

Les dispositifs utilisés en aérodynamique automobile interviennent sur le décollement qui a lieu sur l'arrière du véhicule, en particulier dans la région du raccord entre le pavillon et la lunette arrière, d'une part, et la lunette arrière et le coffre, d'autre part.

Les dispositifs classiques sont essentiellement constitués par des becquets, des ailerons ou des déflecteurs placés dans ces zones à l'arrière du véhicule.

Le becquet est utilisé le plus souvent pour réduire le coefficient de pénétration dans l'air et les autres systèmes sont plutôt utilisés pour réduire la portance.

L'invention a pour but de proposer un dispositif aérodynamique qui permet de contrôler les tourbillons longitudinaux et les décollements et d'une manière générale la structure globale de l'écoulement de l'air sur la carrosserie d'un véhicule automobile.

L'invention a donc pour objet un dispositif aérodynamique pour un véhicule automobile, caractérisé en ce qu'il comprend au moins un générateur de vortex au moins en amont ou au niveau ou en aval d'au moins une zone tourbillonnaire de la carrosserie du véhicule pour réduire la traînée et la portance de ce véhicule.

Selon d'autres caractéristiques de l'invention :
- la zone tourbillonnaire est formée par au moins un des éléments de la carrosserie constitué par les montants de baies avant et/ou arrière, le raccord transversal entre le pavillon et le pare-brise et/ou la lunette arrière, les ailes arrière, les passages de roues avant et/ou les passages de roues arrière, les régions de sous-bassement des passages de roues, les blocs optiques arrière,
- chaque générateur de vortex comprend une pièce perturbatrice d'écoulement de petites dimensions fixée sur au moins un desdits éléments de la carrosserie et de forme déterminée pour générer des tourbillons en aval de cette pièce,
- la pièce a la forme d'un "L" comportant une première branche fixée sur ledit élément de carrosserie et une seconde branche en saillie par rapport à cet élément,
- la seconde branche a la forme d'un parallélogramme,
- la seconde branche a la forme d'un trapèze comportant une grande base et une petite base, l'une de ces bases formant un des côtés de la première branche,
- la seconde branche a une longueur comprise entre 1 et 50 mm,
- la seconde branche a une largeur comprise entre 5 et 40 mm,
- la grande base de la seconde branche a une largeur comprise entre 1 et 50 mm et la petite base de ladite seconde branche a une largeur comprise entre 5 et 40 mm,
- la seconde branche forme avec la première branche un angle fixe compris entre 1 et 180°,
- la seconde branche forme avec la première branche un angle variable compris entre 0 et 180°, cet angle étant piloté par un organe de commande en fonction d'informations fournies par au moins un capteur de pression et/ou de vitesse et/ou de frottement implanté sur la carrosserie du véhicule.

L'invention a aussi pour objet un véhicule automobile, caractérisé en ce qu'il comporte un dispositif aérodynamique tel que précédemment mentionné.

L'invention sera mieux comprise à la lecture de la description qui va suivre, donnée à titre d'exemple et faite en se référant aux dessins annexés, sur lesquels :
- la Fig. 1 est une vue schématique de côté d'un véhicule automobile équipé d'un dispositif aérodynamique conforme à l'invention et implanté sur des zones de la carrosserie,
- la Fig. 2 est une vue schématique en perspective de l'arrière d'un véhicule automobile équipé d'un dispositif aérodynamique conforme à l'invention,
- la Fig. 3 est une vue schématique de côté d'un véhicule automobile équipé d'un dispositif aérodynamique conforme à l'invention et implanté dans d'autres zones de la carrosserie,
- la Fig. 4 est une vue schématique d'une partie du sous-bassement d'un véhicule automobile équipé d'un dispositif aérodynamique conforme à l'invention,
- les Figs. 5A et 5B sont deux vues schématiques en perspective de deux modes de réalisation d'un dispositif aérodynamique conforme à l'invention,
- la Fig. 6 est une vue schématique en perspective montrant les tourbillons longitudinaux générés par un dispositif aérodynamique conforme à l'invention.

Les véhicules automobiles, lorsqu'ils roulent, sont soumis à des efforts qui s'opposent à leur avancement et qui sont les frottements solides, les frottements aérodynamiques et, à haute vitesse, les forces aérodynamiques générées par les dépressions et par les décollements, les recirculations et les tourbillons longitudinaux de l'air.

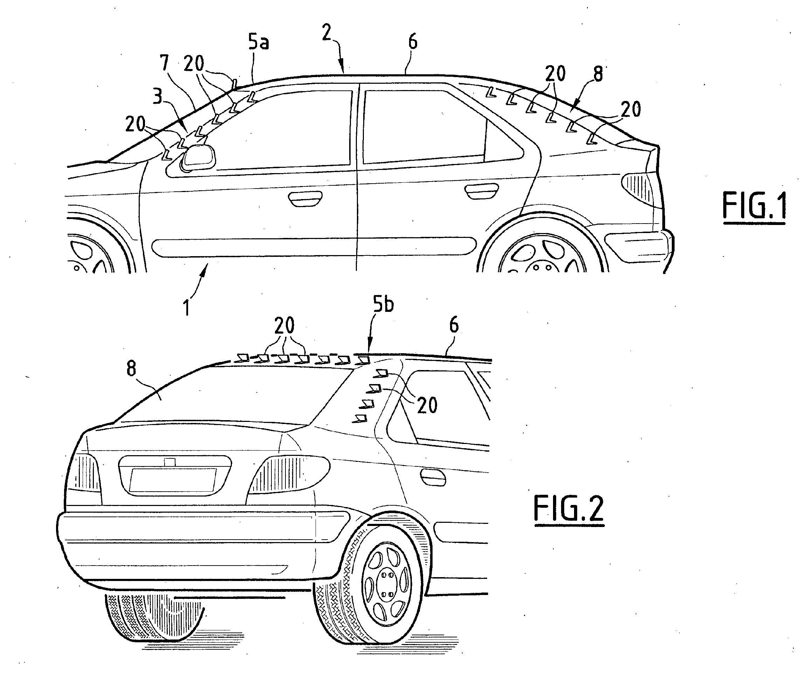

Ainsi, une carrosserie 2 d'un véhicule automobile 1, comme représentée sur les Figs. 1 et 2, comporte des régions de basse pression où ces phénomènes sont particulièrement importants.

Comme montré sur les Figs. 1 et 2, ces zones de la carrosserie 2 du véhicule automobile 1 sont notamment les montants de baie avant 3, les montants de baie arrière 4 et le raccord transversal 5a entre le pavillon 6 et le pare-brise 7, le raccord transversal 5b entre le pavillon 6 et la lunette arrière 8.

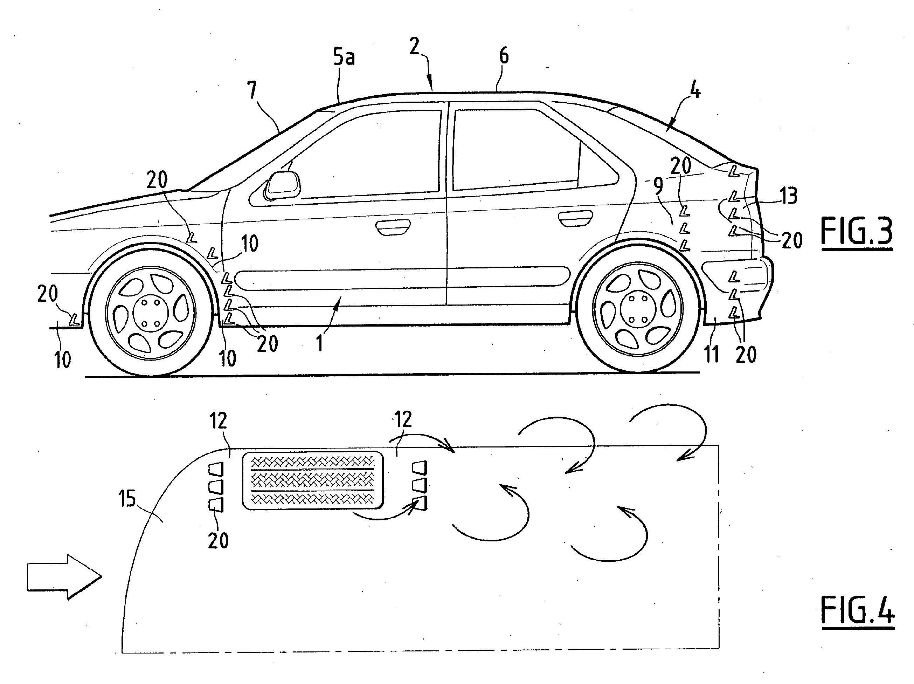

Comme montré sur les Figs. 3 et 4, ces zones de la carrosserie 2 sont aussi les ailes arrière 9, les régions entourant les passages de roues avant 10 et/ou les passages de roues arrière 10, les régions 12 de sous-bassement 15 entourant les passages de roues avant et/ou arrière, les blocs optiques arrière 13.

L'une ou l'ensemble de ces zones est pourvu d'un dispositif aérodynamique qui comprend au moins un générateur de vortex désigné par la référence générale 20.

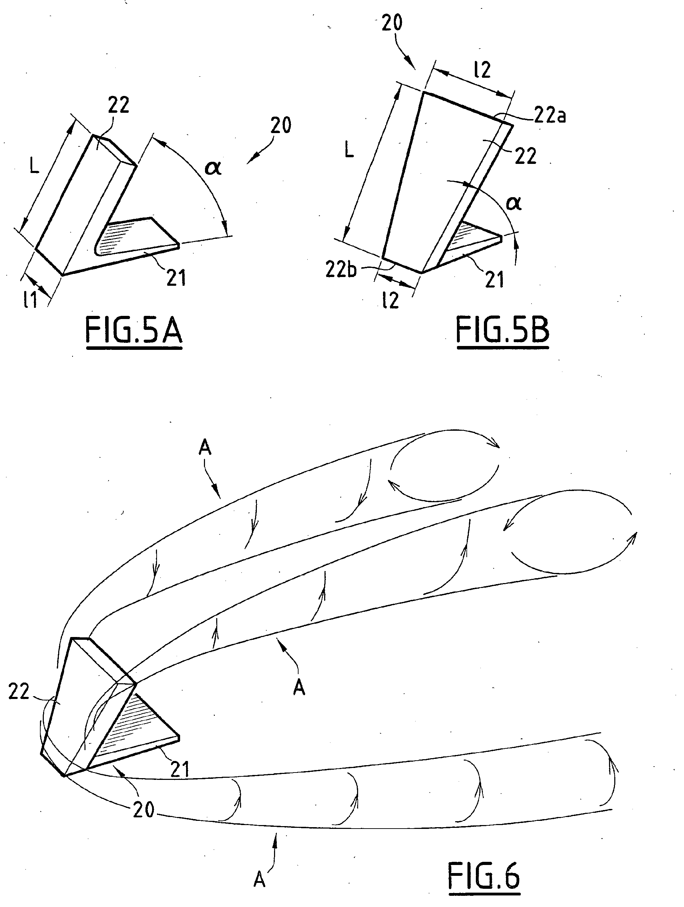

Chaque générateur de vortex comprend une pièce 20 perturbatrice d'écoulement, de petites dimensions, et qui, de préférence, a la forme d'un "L" comportant une première branche 21 fixée sur l'élément correspondant de la carrosserie 2 du véhicule automobile et une seconde branche 22 en saillie par rapport à cet élément, ainsi que montré sur les Figs. 5A et 5B.

Selon un premier mode de réalisation représenté sur la Fig. 5A, la seconde branche 22 de la pièce 20 a la forme d'un parallélépipède et présente, d'une part, une longueur "L" comprise entre 1 et 50 mm, et d'autre part, une largeur "I1" compris 5 et 40 mm.

Selon un second mode de réalisation représenté sur la Fig. 5B, la seconde branche 22 de la pièce 20 a la forme d'un trapèze comportant une grande base 22a et une petite base 22b, l'une de ces bases formant un des côtés de la première branche 21. La longueur "L" de la seconde branche 22 est comprise entre 1 et 50 mm et la largeur, d'une part, de la grande base 22a est comprise entre 5 et 40 mm et, d'autre part, de la petite base 22b est comprise entre 1 et 50 mm.

La seconde branche 22 forme, avec la première branche 21, un angle α fixe compris entre 1 et 180°.

Selon une variante, les pièces 20 sont motorisées et la seconde branche 22 de chacune de ces pièces 20 est intégrée dans la carrosserie ou forme avec celle-ci un angle prédéterminé. Par exemple, si la vitesse du véhicule est inférieure à 80km/h, les pièces 20 sont intégrées dans la carrosserie et si cette vitesse est supérieure à 80 km/h les secondes branches 22 sont en saillie et forment un angle donné pré-établi.

Selon une autre variante, la seconde branche 22 forme avec la première branche 21 un angle variable compris entre 0 et 180°. Pour un angle de 0° la branche 22 est intégrée dans la carrosserie.

Dans ce cas, l'angle entre les branches 21 et 22 est piloté à chaque instant par un organe de commande, non représenté, en fonction d'informations fournies par au moins un capteur, non représenté, de pression, et/ou de vitesse et/ou de frottement implanté sur la carrosserie 2 du véhicule automobile 1 ou dans le véhicule automobile.

Ainsi, chaque pièce 20 perturbatrice d'écoulement présente une forme déterminée qui génère des tourbillons A en aval de cette pièce, comme montré à la Fig. 6, ce qui permet de réduire la traînée et la portance du véhicule automobile, qu'il soit monospace, bi-corps ou tri-corps. Ces pièces 20 perturbent les structures tourbillonnaires générées autour du véhicule, à savoir les décollements générés au niveau du pavillon, au niveau du raccord transversal entre le pavillon et le pare-brise et/ou la lunette arrière, des ailes arrière, des passages de roues, du sous-bassement au niveau des passages de roues. Ces structures génériques sont déterminantes pour les valeurs prises par les efforts exercés sur le véhicule.

Ainsi, les pièces 20 constituant chacune un générateur de vortex perturbent les tourbillons longitudinaux au niveau desdites zones et ces pièces 20 peuvent être disposées dans l'une ou dans l'ensemble de ces zones.

Dans chacune de ces régions à instrumenter, chaque pièce 20 peut avoir des dimensions appropriées et comporter une ou plusieurs desdites pièces séparées d'une distance allant de une à quatre largeurs desdites pièces.

Le dispositif aérodynamique selon l'invention permet donc, par des moyens simples, de réduire la traînée et la portance de ce véhicule et, de ce fait, de diminuer la consommation et d'augmenter la stabilité dudit véhicule.

## Revendications

1. Dispositif aérodynamique pour un véhicule automobile, **caractérisé en ce qu'**il comprend au moins un générateur de vortex (20) au moins en amont ou au niveau ou en aval d'au moins une zone tourbillonnaire (3 ; 4 ; 5a; 9 ; 10 ; 11; 12 ; 13) de la carrosserie (2) du véhicule pour réduire la traînée et la portance de ce véhicule.

2. Dispositif selon la revendication 1, **caractérisé en ce que** la zone tourbillonnaire est formée par au moins un des éléments de la carrosserie constitué par les montants de baie avant (3) et/ou arrière (4), le raccord transversal (5a) entre le pavillon (6) et le pare-brise (7), le raccord transversal (5b) entre le pavillon (6) et la lunette arrière (8), les ailes arrières (9), les passages de roues avant (10), les passages de roues arrière (11), les régions (12) de sous-bassement (15) des passages de roues avant et/ou arrière, les blocs optiques arrière (13).

3. Dispositif selon la revendication 1 ou 2, **caractérisé en ce que** chaque générateur de vortex comprend une pièce (20) perturbatrice d'écoulement de petites dimensions fixée sur au moins un desdits éléments de la carrosserie (2) et de forme déterminée pour générer des tourbillons en aval de cette pièce (20).

4. Dispositif selon la revendication 3, **caractérisé en ce que** la pièce (20) a la forme d'un "L" comportant une première branche (21) fixée sur ledit élément de la carrosserie (2) et une seconde branche (22) en saillie par rapport à cet élément.

5. Dispositif selon la revendication 4, **caractérisé en ce que** la seconde branche (22) a la forme d'un parallélogramme.

6. Dispositif selon la revendication 4, **caractérisé en ce que** la seconde branche (22) a la forme d'un trapèze comportant une grande base (22a) et une petite base (22b), l'une de ces bases formant un des côtés de la première branche (21).

7. Dispositif selon l'une quelconque des revendications 4 à 6, **caractérisé en ce que** la seconde branche (22) a une longueur comprise entre 1 et 50 mm.

8. Dispositif selon l'une quelconque des revendications 4, 5 ou 7, **caractérisé en ce que** la seconde branche (22) a une largeur comprise entre 5 et 40 mm.

9. Dispositif selon l'une quelconque des revendications 4, 6 ou 7, **caractérisé en ce que** la grande base (22a) de la seconde branche (22) a une largeur comprise entre 1 et 50 mm et la petite base de ladite seconde branche a une largeur comprise 5 et 40 mm.

10. Dispositif selon l'une quelconque des revendications 4 à 9, **caractérisé en ce que** la seconde branche (22) forme avec la première branche (11) un angle fixe compris entre 1 et 180°.

11. Dispositif selon l'une quelconque des revendications 4 à 9, **caractérisé en ce que** la seconde branche (22) forme avec la première branche (21) un angle variable compris entre 0 et 180°, cet angle étant piloté par un organe de commande en fonction d'informations fournies par au moins un capteur de pression et/ou de vitesse et/ou de frottement implanté sur la carrosserie (2) du véhicule automobile.

12. Véhicule automobile, **caractérisé en ce qu'**il comporte un dispositif aérodynamique (20) selon l'une quelconque des revendications précédentes.
